# FASCICULE DE BREVET EUROPEEN

(11) **EP 2 095 992 B1**
(45) Date de publication et mention de la délivrance du brevet: **02.03.2011**
(21) Numéro de dépôt: 08164130.0
(22) Date de dépôt: 11.09.2008
(51) Int. Cl.: B60N 2/48

(54) **Siège de véhicule automobile, à appuie tête escamotable**
Kraftfahrzeugsitz mit versenkbarer Kopfstütze
Automobile seat with retractable headrest.

(30) Priorité: 28.11.2007 FR 0759401
(43) Date de publication de la demande: 02.09.2009
(73) Titulaire: PEUGEOT CITROËN AUTOMOBILES S.A., 78140 Vélizy Villacoublay (FR)
(72) Inventeur: Gomes, Antonio, 78560 Le Port Marly (FR)

(56) Documents cités:
- EP-A- 1 454 788
- DE-A1- 10 125 758
- FR-A- 2 868 997
- FR-A- 2 898 837
- US-A- 2 985 229

## Description

La présente invention est relative à un siège de véhicule automobile, dont la partie supérieure du dossier est munie d'un appuie tête, et s'applique plus particulièrement aux sièges de ce genre destinés à équiper les places arrière d'un véhicule du type « compact car » ou similaire.

Dans un véhicule de ce genre, les sièges arrière sont fréquemment agencés de manière à pouvoir être complètement repliés sur eux-mêmes avec, dans un premier temps, leur dossier rabattu autour d'un premier axe transversal disposé à l'arrière de l'assise de ce siège, ce dossier étant ainsi amené en appui sur cette assise sensiblement horizontale, l'ensemble étant, dans un second temps, basculé globalement, assise et dossier ensemble, autour d'un second axe transversal, parallèle au premier, disposé à la partie inférieure et sous l'assise de manière à ce que le siège puisse être finalement encastré dans un réceptacle ou une fosse, prévue dans le plancher de l'habitacle derrière le siège, en libérant entièrement l'espace disponible au-delà des sièges avant, entre ceux-ci et la porte du hayon arrière.

On conçoit toutefois aisément que, si le dossier d'un tel siège arrière repliable est muni d'un appuie tête qui le prolonge sensiblement vers le haut, de sorte que la hauteur totale de ce dossier avec l'appuie tête soit sensiblement plus grande que la profondeur de l'assise, le rabattement du dossier sur cette dernière va conduire à ce que l'appuie tête déborde largement au-delà de la partie frontale de l'assise en regard des sièges avant lorsque le dossier est rabattu sur celle-ci, de sorte que, après pivotement de l'ensemble autour du second axe, cet appuie tête ne peut pas s'intégrer avec le reste du siège dans le réceptacle du plancher de l'habitacle, rendant son escamotage complet impossible.

La solution à ce problème consiste alors à séparer l'appuie tête et le dossier, lequel comporte de façon usuelle des perçages prévus à son sommet dans lesquels s'engagent des tiges d'une armature rigide appartenant à l'appuie tête, ces tiges qui permettent de régler la hauteur de l'appuie tête par rapport au dossier en utilisation normale en fonction de la taille de l'usager et de la position de sa nuque, pouvant coulisser dans ces perçages et, par un mouvement exercé vers le haut sur l'appuie tête, de séparer celui-ci du dossier qui peut alors être rabattu sur l'assise, avant que l'ensemble du siège ne soit replié dans son réceptacle comme dit ci-dessus.

Or, cette opération de séparation du dossier et de l'appuie tête, par traction vers le haut de ce dernier et retrait de ses tiges d'armature hors des perçages qui sont prévus au sommet de ce dossier, est peu commode à effectuer et conduit à dissocier l'appuie tête du siège, de sorte qu'après escamotage de ce dernier une fois replié, l'appuie tête reste séparé, ce qui implique des contraintes de rangement dans des endroits de l'habitacle non spécifiquement conçus dans ce but.

En particulier, nous connaissons le document EP 1 45 4788 qui décrit un siège escamotable comportant un appuie-tête. Dans cette configuration, le dossier du siège est pliable sur l'assise, tandis que l'appuie-tête effectue une rotation de 180 degrés afin qu'il vienne se plaquer contre la paroi arrière du dossier. Le soubassement de l'arrière de l'assise du siège est munie d'une liaison pivot fixé sur la carrosserie et au bord d'une cavité, dans laquelle on bascule le siège de avec l'appuie tête plaqué contre le dossier, de manière que le dessous de l'assise devienne la continuité du plancher du véhicule. Afin d'éviter une surépaisseur importante de dossier et de l'assise replié, l'appuie-tête vient se loger dans une cavité réalisé dans le dossier du siège. Le mécanisme de repliement de l'appuie-tête est assez compliqué et suppose un surcoût de la prestation.

L'invention propose de pallier ces inconvénients grâce à un mécanisme d'une très grande simplicité qui permet de rétracter l'appuie tête dans le dossier du siège de sorte qu'il ne dépasse pas du contour apparent de ce dossier lorsque celui-ci est rabattu sur l'assise, laquelle avec le dossier contenant ainsi l'appuie tête peut être basculée et encastrée dans le réceptacle du plancher de l'habitacle, sans craindre que l'appuie tête ne gêne, voire même empêche cette opération.

A cet effet, le siège considéré, comportant une assise et, articulé autour d'un axe transversal de pivotement monté à l'arrière de cette assise, un dossier rabattable sur celle-ci par pivotement vers l'avant autour de cet axe, ce dossier comportant, à sa partie supérieure, un logement de réception, ouvert frontalement et dans lequel peut se disposer un appuie tête porté par ce dossier en position rétractée dans laquelle il ne dépasse pas du contour apparent du dossier, l'appuie tête comportant une armature de support formée de deux tiges métalliques, aptes à coulisser verticalement à travers des perçages de guidage prévus au sommet du dossier à la partie supérieure du logement de réception pour permettre d'extraire progressivement l'appuie tête de ce logement et de l'immobiliser dans une position d'utilisation où il fait saillie au-dessus du dossier, se **caractérise en ce que**, au moins une des tiges de l'armature de support de l'appuie tête, à l'intérieur du dossier au-delà de son perçage de guidage, est solidaire de l'extrémité d'un câble de traction, non extensible, de longueur donnée, dont l'autre extrémité est reliée à l'assise en un point fixe de celle-ci, excentré vis-à-vis de la position de l'axe transversal autour duquel pivote le dossier, de telle sorte que, du fait du rabattement de ce dossier sur l'assise autour de cet axe transversal de pivotement, le câble se tende en exerçant sur l'armature de l'appuie tête un effort qui oblige celui-ci à s'escamoter progressivement à l'intérieur du logement de réception.

Selon une autre caractéristique, le débattement le débattement du câble de traction autour de l'axe de pivotement du dossier est égal à la profondeur du logement de réception de l'appuie tête dans ce dossier.

Avantageusement, le câble de traction est guidé dans le dossier au cours de son rabattement sur l'assise, par des oeillets ou similaires, solidaires de ce dossier.

Selon une autre caractéristique, l'extrémité du câble de traction fixée à l'assise comporte une attache de liaison à vis, permettant un réglage de la tension initiale du câble.

D'autres caractéristiques d'un siège de véhicule automobile à appuie tête escamotable, établi conformément à l'invention, apparaîtront encore à travers la description qui suit d'un exemple de réalisation, donné à titre indicatif et non limitatif, en référence aux dessins annexés sur lesquels :

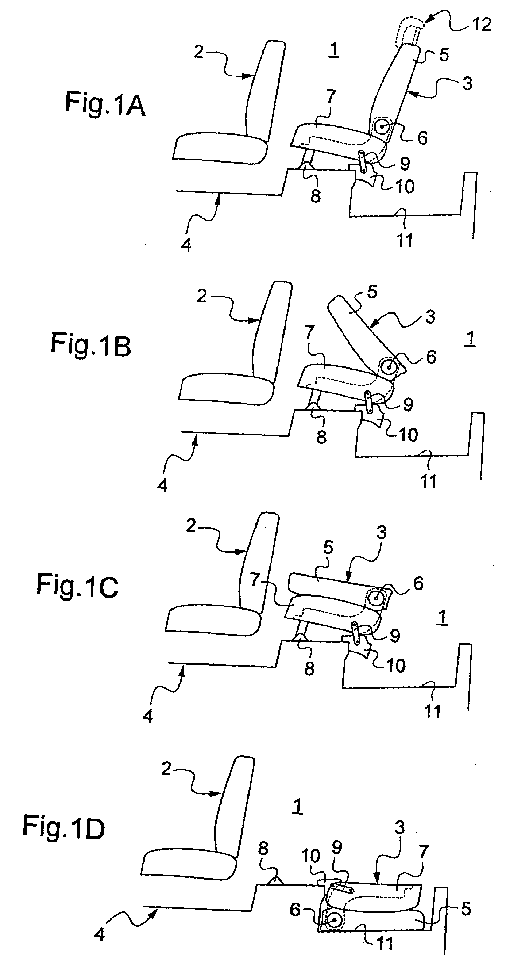

- Les Figures 1A à 1D sont des vues schématiques de l'intérieur de l'habitacle d'un véhicule automobile et notamment d'un siège arrière de celui-ci, explicitant la cinématique avec laquelle ce siège est susceptible d'être replié et entièrement escamoté dans un réceptacle prévu dans le plancher de cet habitacle.

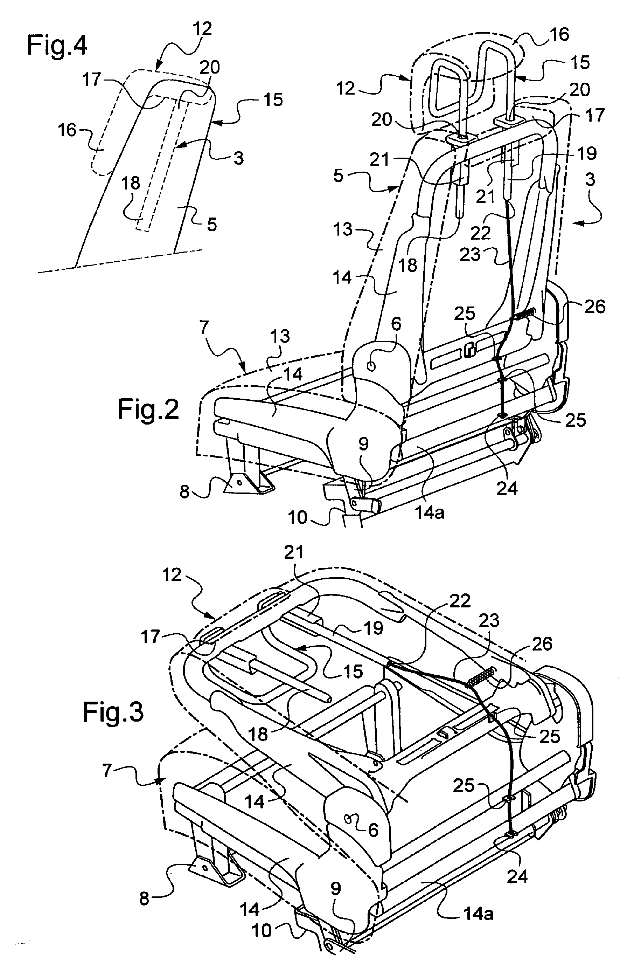

- Les Figures 2 et 3 sont des vues en perspective, à plus grande échelle, du siège conforme à l'invention, représenté respectivement, en position redressée, avec son appuie tête prolongeant son dossier et, en position rabattue sur l'assise de ce siège, avec l'appuie tête rétracté dans son logement de réception.
- La Figure 4 est une vue de détail, illustrant la position de l'appuie tête en position rétractée dans le dossier du siège.

Sur les Figures 1A à 1D, on a schématisé succinctement l'intérieur de l'habitacle 1 d'un véhicule automobile, en illustrant dans celui-ci un de ses sièges avant 2, et derrière celui-ci, un siège arrière 3, ces deux sièges reposant, en position d'utilisation normale, sur le plancher 4 de cet habitacle.

Le siège arrière 3 comporte un dossier 5, articulé autour d'un premier axe transversal horizontal 6 prévu à l'arrière de ce siège et apte à pivoter vers l'avant de celui-ci, sur une assise 7, laquelle porte, comme illustré sur la Figure 1A, sur un appui 8, en contact avec le plancher 4.

Dans certains véhicules, du genre dit « compact car » notamment, il est parfois utile de pouvoir entièrement libérer la zone du plancher 4 de l'habitacle 1 où sont situés les sièges arrières 3, en escamotant totalement ces derniers, de manière à pouvoir disposer de tout l'espace disponible entre les sièges avant et le hayon qui ferme usuellement l'habitacle, à l'extrémité de celui-ci.

Une solution pour ce problème peut consister à rendre ces sièges arrières démontables afin de pouvoir les retirer de l'habitacle au gré des besoins, ce qui pose alors des problèmes pour stocker ces sièges lorsqu'ils sont inutilisés. Une autre solution, déjà proposée dans la technique, consiste à prévoir des moyens pour replier et escamoter ces sièges dans l'habitacle lui-même, de sorte qu'ils puissent libérer le plancher aussi longtemps que nécessaire, avant de pouvoir être remis en place par une simple opération de dépliement, n'exigeant aucun démontage.

Dans ce but, l'assise 7 du siège arrière 3 comporte une biellette de pivotement 9, articulée sur l'assise et sur un support fixe 10, solidaire du plancher 4, agencés de telle sorte que l'assise puisse pivoter avec cette biellette autour d'un second axe transversal, parallèle à l'axe 6 d'articulation du dossier 5 sur l'assise 6 mais décalé par rapport à celui-ci, permettant à l'ensemble formé par cette assise et ce dossier de basculer ensemble une fois repliés l'un sur l'autre, pour venir s'escamoter dans un réceptacle ou fosse de réception 11, prévu par construction dans le plancher 4, et dans lequel ce siège peut être entièrement disposé, en dégageant la surface de ce dernier.

Sur la Figure 1A, le siège 3 est représenté en position d'utilisation, avec son dossier 5 redressé vis-à-vis de son assise 7.

Sur la Figure 1B, le dossier 5 est illustré en cours de rabattement sur l'assise 7, par pivotement autour de l'axe 6.

Sur la Figure 1C, le dossier 5 est montré complètement rabattu sur l'assise, en formant avec elle un ensemble compact de plus faible hauteur.

Sur la Figure 1D, l'ensemble précédent est représenté basculé avec le dossier 5 et l'assise 7 accolés mutuellement, par l'intermédiaire de la biellette 9 ayant pivoté sur le support 10, de manière à s'escamoter dans le réceptacle 11, sous le niveau supérieur du plancher 4, en libérant totalement ainsi la surface de celui-ci pour faciliter le stockage ou le rangement dans l'habitacle.

Ces dispositions brièvement rappelées et schématiquement illustrées, sont déjà bien connues dans la technique et mises en oeuvre dans plusieurs véhicules du type précité. Toutefois, le principe même du repliement du dossier sur l'assise du siège puis du basculement de l'ensemble ainsi regroupé pour s'introduire dans le réceptacle de réception du plancher de l'habitacle, est mis en défaut si le siège arrière 3 comporte au sommet de son dossier 5, un appuie tête 12, schématisé en traits pointillés sur la Figure 1A, qui prolonge ce dossier vers le haut lorsqu'il est redressé et qui, après rabattement de ce dossier sur l'assise 7, va dès lors déborder largement de celle-ci en direction du siège avant, de telle sorte que, après basculement vers l'arrière de cette assise et du dossier par le moyen de la biellette 9 comme exposé ci-dessus, l'ensemble du siège ne peut plus pénétrer dans le réceptacle 11, l'appuie tête 12, qui dépasse du contour apparent du dossier, empêchant qu'il ne s'y escamote complètement.

La présente invention concerne un perfectionnement à un siège de ce genre, qui évite cet inconvénient, en permettant de rétracter l'appuie tête dans le dossier en même temps que celui-ci est rabattu sur son assise, de sorte que, une fois ce rabattement réalisé, il ne déborde plus par rapport à celle-ci, l'ensemble formé par le dossier et l'assise une fois regroupés, pouvant se loger sans difficultés dans le réceptacle du plancher de l'habitacle, en libérant totalement la surface de ce dernier.

Sur les Figures 2 à 4, on retrouve avec une représentation moins schématique, le dossier 5 et l'assise 7 du siège 3, comportant l'un et l'autre un matelassage ou garniture extérieure 13, entourant une ossature rigide 14, ainsi que l'axe d'articulation 6, permettant de replier le dossier sur l'assise comme dit plus haut.

Le rabattement de l'ensemble formé par le dossier une fois replié sur l'assise, s'effectue par l'intermédiaire de la biellette 9 sur le support fixe 10 autour d'un tirant 14a, appartenant à l'ossature 14 de l'assise, ce tirant étant sensiblement décalé par rapport à la position de l'axe de rotation 6, autour duquel pivote le dossier 5 pour se rabattre sur cette assise 7.

L'appuie tête 12 monté à la partie supérieure du dossier 5, comporte également une armature de raidissement interne 15, entourée par un matelassage 16, qui donne sa forme à l'appuie tête, ce dossier 5 étant conformé pour présenter frontalement un logement ouvert 17, dont la profondeur est choisie sensiblement égale à la hauteur de l'appuie tête et dans lequel celui-ci peut à volonté se rétracter, auquel cas il ne dépasse pas ou pratiquement pas du contour apparent du dossier (Voir le schéma de détail de la Figure 4), ou à l'inverse être extrait de ce logement en prolongeant le dossier vers le haut, pour fournir à l'utilisateur du siège un appui pour sa nuque, confortable et approprié en cas de choc notamment.

De façon connue, l'armature de raidissement 15 de l'appuie tête 12 comporte deux tiges parallèles 18 et 19, qui assurent le support et le coulissement sensiblement verticalement de l'appuie tête vis-à-vis de la partie supérieure du dossier 5, ces tiges traversant des perçages 20 prévus à cet effet et prolongés à l'intérieur du dossier par des guides 21 pour assurer le déplacement rectiligne de ces tiges, dans un sens ou dans l'autre.

Selon l'invention, le dossier 5 du siège comporte un moyen propre à permettre de provoquer automatiquement le retrait de l'appuie tête 12 dans son logement 17 au sommet de ce dossier, lorsque celui-ci est rabattu sur son assise 7, avant que l'ensemble formé par ce dossier et cette assise appliqués l'un sur l'autre, ne soit basculé en restant groupé pour s'escamoter dans le réceptacle 11 du plancher 4 de l'habitacle 1, la position de l'appuie tête ne pouvant plus gêner l'introduction du siège replié dans ce réceptacle 11 du plancher 4.

Dans ce but, l'une au moins des tiges de l'armature de raidissement 15 de l'appuie tête 12, ici la tige 19, est reliée à l'une des extrémités 22 d'un câble 23, monté à l'intérieur de la garniture 13 du dossier 5, et dont l'autre extrémité 24 est réunie à un point fixe, notamment au tirant 14a de l'ossature 14 de l'assise 7.

Le câble 23 est un câble métallique souple, présentant une longueur constante entre ses extrémités 22 et 24. De préférence, l'une au moins de ces extrémités, de préférence celle 24 qui est liée au tirant 14a, comporte une attache à vis qui permet d'ajuster la tension initiale du câble 23 en position redressée du dossier 5 par rapport à l'assise 7. Le câble 23 est par ailleurs guidé sur sa longueur par des oeillets 25 qui le maintiennent appliqués sur l'ossature 14 du dossier ; un ressort 26 permet de contrôler en permanence sa tension, notamment lors des mouvements du dossier 5 et d'éviter qu'il ne flotte ou se coince, lors des mouvements de débattement du dossier.

Grâce à ces dispositions, on comprend aisément que, du fait de sa longueur constante et du décalage réalisé par construction entre la position de l'axe 6 vis-à-vis duquel tourne le dossier 5 par rapport à l'assise 7 d'une part, et du tirant 14a sur lequel est fixé l'extrémité 24 de ce câble 23 d'autre part, le rabattement du dossier va immédiatement provoquer un effort de traction sur l'autre extrémité 22 du câble, liée à la tige 19 de l'armature de raidissement 15 de l'appuie tête 12, en forçant celui-ci à se rétracter dans le logement de réception 17 du dossier, jusqu'au moment où, ce dossier 5 étant appliqué sur l'assise 7, l'appuie tête 12 est complètement contenu dans ce logement et ne déborde plus du contour apparent du dossier.

Le débattement du câble 23 au cours du rabattement du dossier 5 est notamment déterminé pour être égal à la profondeur du logement frontal 17. Dès lors, l'ensemble du siège 3 une fois replié peut être entièrement basculé dans le réceptacle 11, sans craindre que l'appuie tête 12 n'empêche ou même seulement gêne ce mouvement.

Lorsque le siège est ultérieurement sorti du réceptacle 11 et déplié, le câble 23 ne s'oppose pas au débattement du dossier 5 s'écartant de l'assise 7, le soulèvement de l'appuie tête pour l'extraire ensuite du logement 17 pouvant être réalisé en suivant, pour le disposer à hauteur convenable au dessus du dossier.

Bien entendu, il va de soi que l'invention ne se limite pas à l'exemple de réalisation décrit ci-dessus et illustré sur les dessins annexés; elle en embrasse au contraire toutes les variantes.

## Revendications

1. Siège de véhicule automobile à appuie tête escamotable, comportant une assise (7) et, articulé autour d'un axe transversal de pivotement (6) monté à l'arrière de cette assise, un dossier (5) rabattable sur celle-ci par pivotement vers l'avant autour de cet axe, ce dossier comportant, à sa partie supérieure, un logement de réception (17), ouvert frontalement et dans lequel peut se disposer un appuie tête (12) porté par ce dossier en position rétractée dans laquelle il ne dépasse pas du contour apparent du dossier (5), l'appuie tête comportant une armature de support (15) formée de deux tiges métalliques (18,19), aptes à coulisser verticalement à travers des perçages de guidage (20) prévus au sommet du dossier à la partie supérieure du logement de réception (17) pour permettre d'extraire progressivement l'appuie tête (12) de ce logement et de l'immobiliser dans une position d'utilisation où il fait saillie au-dessus du dossier, **caractérisé en ce que**, au moins une (19) des tiges de l'armature de support (15) de l'appuie tête (12), à l'intérieur du dossier au-delà de son perçage de guidage (20), est solidaire de l'extrémité (22) d'un câble de traction (23), non extensible, de longueur donnée, dont l'autre extrémité (24) est reliée à l'assise (7) en un point fixe de celle-ci, excentré vis-à-vis de la position de l'axe transversal (6) autour duquel pivote le dossier (5), de telle sorte que, du fait du rabattement de ce dossier sur l'assise autour de cet axe transversal de pivotement, le câble (23) se tende en exerçant sur l'armature (15) de l'appuie tête (12) un effort qui oblige celui-ci à s'escamoter progressivement à l'intérieur du logement de réception (17).

2. Siège de véhicule automobile selon la revendication 1, **caractérisé en ce que** le débattement du câble de traction (23) autour de l'axe de pivotement (6) du dossier (5), est égal à la profondeur du logement de réception (17) de l'appuie tête (12) dans ce dossier.

3. Siège de véhicule automobile selon l'une des revendications 1 ou 2, **caractérisé en ce que** le câble de traction (23) est guidé dans le dossier (5) au cours de son rabattement sur l'assise, par des oeillets ou similaires (25), solidaires de ce dossier.

4. Siège de véhicule automobile selon l'une des revendications 1 à 3, **caractérisé en ce que** l'extrémité (24) du câble de traction (23) fixée à l'assise (7) comporte une attache de liaison à vis, permettant un réglage de la tension initiale du câble.

5. Siège de véhicule automobile selon l'une des revendications 1 à 4, **caractérisé en ce qu'**un un ressort (26) permet de contrôler en permanence la tension du câble de traction (23).

## Claims

1. Motor vehicle seat having a retractable headrest, comprising a seat squab (7) and, hinged about a transverse pivot pin (6) fitted at the rear of this seat squab, a backrest (5) that can be hinged down onto the latter by pivoting forwards about this pin, this backrest comprising, in its upper part, an accommodating housing (17), which is open at the front and in which there may be located a headrest (12) held by this backrest in a retracted position in which it does not protrude beyond the visible contour of the backrest (5), the headrest comprising a support frame (15) formed by two metal rods (18, 19) able to slide vertically through guide holes (20) provided at the top of the backrest in the upper part of the accommodating housing (17) in order that the headrest (12) can be pulled gradually out of this housing and immobilized in a use position in which it protrudes above the backrest, **characterized in that** at least one (19) of the rods of the support frame (15) of the headrest (12), further inside the backrest than its guide hole (20), is secured to the end (22) of a non-extendable traction cable (23) of given length, the other end (24) of which is connected to the seat squab (7) at a fixed point thereof which is off-centre with respect to the position of the transverse pin (6) about which the backrest (5) pivots, such that, on account of the hinging down of this backrest onto the seat squab about this transverse pivot pin, the cable (23) tightens, exerting on the frame (15) of the headrest (12) a force which compels the latter to retract gradually into the accommodating housing (17).

2. Motor vehicle seat according to Claim 1, **characterized in that** the travel of the traction cable (23) about the pivot pin (6) of the backrest (5) is equal to the depth of the accommodating housing (17) for the headrest (12) in this backrest.

3. Motor vehicle seat according to either of Claims 1 and 2, **characterized in that** the traction cable (23) is guided in the backrest (5), while the latter is hinged down onto the seat squab, by eyelets or the like (25) which are secured to this backrest.

4. Motor vehicle seat according to one of Claims 1 to 3, **characterized in that** the end (24) of the traction cable (23) fastened to the seat squab (7) comprises a screw connection fitting making it possible to set the initial tension of the cable.

5. Motor vehicle seat according to one of Claims 1 to 4, **characterized in that** a spring (26) permanently controls the tension of the traction cable (23).

## Patentansprüche

1. Kraftfahrzeugsitz mit einer einklappbaren Kopfstütze, der einen Sitzteil (7) und eine um eine Querschwenkachse (6) angelenkte, hinter diesem Sitzteil angebrachte Rückenlehne (7) aufweist, die durch Nachvorneschwenken um diese Achse auf sich selbst umgeklappt werden kann, wobei diese Rückenlehne an ihrem oberen Teil einen vorne offenen Aufnahmeraum (17) aufweist, in den eine von dieser Rückenlehne getragene Kopfstütze (12) in einer eingezogenen Position davon angeordnet werden kann, in der sie nicht über die sichtbare Kontur der Rückenlehne (5) vorragt, wobei die Kopfstütze einen Stützanker (15) aufweist, der aus zwei Metallstangen (18, 19) gebildet ist, die vertikal durch am oberen Ende der Rückenlehne im oberen Bereich des Aufnahmeraums (17) vorgesehene Führungsbohrungen (20) gleiten können, um das allmähliche Herausziehen der Kopfstütze (12) aus diesem Raum zu gestatten und sie in einer Gebrauchsposition festzulegen, in der sie über die Rückenlehne hinaus vorragt, **dadurch gekennzeichnet, dass** mindestens eine (19) der Stangen des Stützankers (15) der Kopfstütze (12) im Inneren der Rückenlehne hinter ihrer Führungsbohrung (20) fest mit dem Ende (22) eines nicht ausziehbaren Zugseils (23) mit einer gegebenen Länge verbunden ist, dessen anderes Ende (24) mit dem Sitzteil (7) an einem festen Punkt davon verbunden ist, der bezüglich der Position der Querachse (6), um die die Rückenlehne (5) schwenkt, exzentrisch ist, so dass infolge des Umklappens dieser Rückenlehne auf den Sitzteil um diese Querschwenkachse das Seil (23) gespannt wird und auf den Anker (15) der Kopfstütze (12) eine Kraft ausübt, die ihn dazu zwingt, allmählich in das Innere des Aufnahmeraums (17) einzuklappen.

2. Kraftfahrzeugsitz nach Anspruch 1, **dadurch gekennzeichnet, dass** die Bewegung des Zugseils (23) um die Schwenkachse (6) der Rückenlehne gleich der Tiefe des Aufnahmeraums (17) der Kopfstütze (12) in dieser Rückenlehne ist.

3. Kraftfahrzeugsitz nach Anspruch 1 oder 2, **dadurch gekennzeichnet, dass** das Zugseil (23) durch fest mit dieser Rückenlehne verbundene Ösen oder dergleichen (25) während des Umklappen der Rückenlehne (5) auf den Sitz in der Rückenlehne geführt wird.

4. Kraftfahrzeugsitz nach einem der Ansprüche 1 bis 3, **dadurch gekennzeichnet, dass** das am Sitzteil (7) befestigte Ende (24) des Zugseils (23) eine Schraubverbindungsbefestigung aufweist, die ein Einstellen der Anfangsspannung des Seils gestattet.

5. Kraftfahrzeugsitz nach einem er Ansprüche 1 bis 4, **dadurch gekennzeichnet, dass** eine Feder (26) gestattet, die Spannung des Zugseils (23) ständig zu regulieren.
